Europäisches Patentamt

European Patent Office

Office européen des brevets

(19)

(11) **EP 1 385 108 A1**

(12) **EUROPEAN PATENT APPLICATION**

(43) Date of publication:
**28.01.2004 Bulletin 2004/05**

(51) Int Cl.$^7$: **G06F 17/60**

(21) Application number: **02405629.3**

(22) Date of filing: **19.07.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(71) Applicant: **ABB RESEARCH LTD.**
**8050 Zürich (CH)**

(72) Inventors:
• **Gallestey Alvarez, Eduardo**
**5522 Tägerig (CH)**

• **Castagnoli, Dario**
**5404 Baden (CH)**
• **Frei, Christian**
**5442 Fislisbach (CH)**

(74) Representative: **ABB Patent Attorneys**
**c/o ABB Schweiz AG,**
**Intellectual Property (CH-LC/IP),**
**Brown Boveri Strasse 6**
**5400 Baden (CH)**

(54) **Method, computer program and apparatus for batch scheduling**

(57)    Batch scheduling for a plurality of production units, where each production unit is capable of producing a predetermined quantity of a product having at least one characteristic grade that is controllable by a manner of operating the production unit, and a batch schedule to be determined comprises a specification of what grade product is to be produced on which production unit at which time of a predetermined first period of time, is achieved by performing a scheduling step of

minimising an objective function subject to hard constraints, where said objective function is computed as a function of the batch schedule and comprises a cost of energy used by the production units during the first period of time,

and where said hard constraints are expressed as equalities and inequalities in terms of the batch schedule and comprise

• a specification of quantities of the product of a given grade to be produced,
• a set of maximum and minimum storage capacities for each product grade, and where minimising the objective function is achieved by repeatedly varying the batch schedule subject to the hard constraints and computing the value of the objective function until an optimised value of the objective function is obtained,
and returning, as result of the minimisation, an optimal batch schedule corresponding to the optimised value of the objective function.

Fig. 2

EP 1 385 108 A1

## EP 1 385 108 A1

### Description

### Field of the Invention

The invention relates to the field of process scheduling and control. It relates to a method, computer program and apparatus for batch scheduling as described in the preamble of claims 1, 14 and 15, respectively.

### Background of the Invention

Cement producers are driven to produce different grades of cement at the lowest possible cost within continuously changing economical, environmental and technological restraints. The cement process is complex and requires high-level control to achieve long periods of stability and good performance. There are obvious benefits if the process is achieved in the most economic way. In order to reach this goal, the overall economic optimisation of the kiln process, the optimisation of the raw mix preparation process, the management of alternative fuels and the scheduling of the raw meal and/or cement mills need to be considered. The present application addresses this last area of cement mills scheduling: Cement producers must plan the use of several cement mills in such a way that tight process constraints regarding time, quality and quantity of several different cement types are satisfied. In typical cement plants, 30 to 40 cement mills are available and their work must be scheduled almost minute wise. At the same time, there is a strong pressure to reduce the energy costs implied by these operations, a goal that is very difficult to achieve in today's liberalized electricity markets with large variations in electricity prices over time. Determining these schedules is usually done manually, based on operator experience and in a very conservative way.

US 5,148,370 shows an expert system and method for batch production scheduling and planning. A set of generic heuristic rules is combined with a description of a number of tasks to be achieved by a plant. An inference engine processes this information, and a heuristically optimal solution is generated. However, generating the set of rules according to the type of process at hand involves a large engineering effort and knowledge about expert systems. The rules must be construed in a manner to ensure an optimal result, but it is not obvious how mixed optimality criteria are to be handled and whether optimality can be ensured at all.

### Description of the Invention

It is therefore an object of the invention to create a method, computer program and apparatus for batch scheduling of the type mentioned initially, which allows to state the problem formulation and optimality criteria in a simpler and more effective way.

These objects are achieved by a method, computer program and apparatus for batch scheduling according to the claims 1, 14 and 15.

In the inventive method for batch scheduling for a plurality of production units, each production unit is capable of producing a predetermined quantity of a product having at least one characteristic grade that is controllable by a manner of operating the production unit, and a batch schedule to be determined comprises a specification of of what grade product is to be produced on which production unit at which time of a predetermined first period of time, and the method comprises a scheduling step of minimising an objective function subject to hard constraints, where said objective function is computed as a function of the batch schedule and comprises a cost of energy used by the production units during the first period of time, and where said hard constraints are expressed as equalities and inequalities in terms of the batch schedule and comprise

- •    a specification of quantities of the product of a given grade to be produced,
- •    a set of maximum and minimum storage capacities for each product grade, and where minimising the objective function is achieved by repeatedly varying the batch schedule subject to the hard constraints and computing the value of the objective function until an optimised value of the objective function is obtained, and returning, as result of the minimisation, an optimal batch schedule corresponding to the optimised value of the objective function.

The method according to the invention ensures that at least a locally optimal schedule is found. Finding a better schedule is a question of computing time and not of problem expression, schedules nearer to the true optimum are readily found if sufficient computing power is available. Optimality criteria representing different aspects of the scheduling problem are easily traded off against one another by changing corresponding weights in the objective function.

In a preferred variant of the invention, the hard constraints comprise an expression stating that a production unit can be used for only one product grade at a time. This nevertheless must be taken into account by the optimisation. In another preferred variant of the invention, the hard constraints comprise an expression stating that a production unit cannot be used at all, or that its production volume is limited. This allows to take a production unit out of operation for a given period of time or to limit lifetime consumption of the unit.

In a preferred variant of the invention, the hard constraints comprise an expression stating that, if a production unit is committed to produce the product of a given grade, then a minimal quantity of said grade must be produced by said production unit. This implicitly limits a number of times that the production unit has to be switched to another grade, which is to be avoided.

In a preferred variant of the invention, the objective function comprises a term that penalises changes in product grade produced in the same production unit. This also limits the number of grade switches, but in a more explicit manner.

In a preferred variant of the invention, the objective function comprises a term that penalises a use of energy per time unit that exceeds a given limit. This allows to take into account contracts with energy providers, especially providers of electrical energy, which contracts specify a maximum amount of power or energy to be delivered, and penalties or excessive prices whenever such a maximum is exceeded.

In a preferred variant of the invention, the first period of time is split into a sequence of second periods of time, and the method comprises a first scheduling step that schedules production over the first period of time and determines, for each of the second periods of time and for each production unit, a set of quantities of product of a given grade that is to be produced, and a second scheduling step that schedules production by one production unit for one of the second periods of time, where the second scheduling step is executed repeatedly for each of the second periods of time and for each of the production units. This separation of the optimisation problem into two steps reduces computational complexity and therefore the computational effort to reach a useful solution.

In a preferred variant of the invention, the first scheduling step comprises minimising an objective function subject to hard constraints, where said objective function comprises

- a cost of energy used by the production units, a term that penalises changes in product grade produced in the same production unit, and
- a term that penalises a use of energy per time unit that exceeds a given limit, and where said hard constraints comprise,
- for each of the second periods of time, a set of quantities of the product to be produced having a given grade,
- a set of maximum and minimum storage capacities for each product grade,
- an expression limiting, for each production unit and for each of the second periods of time, the time that the production unit may be in operation, and
- an expression stating that, for each of the second periods of time, when a production unit is committed to produce the product of a given grade, then a minimal quantity of said grade must be produced by said production unit.

In a preferred variant of the invention, the second scheduling step that schedules production by one production unit for one of the second periods of time comprises the step of

- minimising an objective function subject to hard constraints, where said objective function comprises a cost of energy used by the production unit, a term that penalises changes in product grade produced in the production unit, and a term that penalises a use of energy per time unit that exceeds a given limit,

and where said hard constraints comprise,

- for the production unit, a set of quantities of the product having a given grade, to be produced, and
- an expression stating that only one grade can be produced at the same time.

In a preferred variant of the invention, the term that penalises changes in product grade produced in the same production unit comprises, for each production unit, the number of different product grades produced by said production unit over the first period of time and, for each production unit and each of the second periods of time, the number of different product grades produced by said production unit.

In a preferred variant of the invention, the production units are cement mills and/or mills for producing raw meal, and the controllable characteristic grade is one of grade of cement or type of raw meal. A human-readable description of the optimal batch schedule is generated and used by an operator to control the mills. In a preferred embodiment of the invention, the cement mills are operated and controlled according to the optimal batch schedule in an automatic mode via plant control system.

In a preferred variant of the invention, model predictive control techniques are applied for ensuring that actual operation of the cement mills corresponds to the scheduled operation. This allows to compensate for unexpected events and non-ideal operation of the mills.

The computer program for batch scheduling according to the invention is loadable into an internal memory of a digital computer, and comprises computer program code means to make, when said computer program code means is loaded in the computer, the computer execute the method according to the invention. In a preferred embodiment of the invention, a computer program product comprises a computer readable medium, having the computer program code means recorded thereon.

The apparatus for batch scheduling according to the invention comprises a data processor, a memory coupled to the processor and computer program code means stored in said memory, where said computer program code means, when executed by the processor, causes the method according to the invention to be executed.

Further preferred embodiments are evident from the dependent patent claims.

### Brief Description of the Drawings

The subject matter of the invention will be explained in more detail in the following text with reference to preferred exemplary embodiments, which are illustrated in the attached drawings, in which:

Figure 1 schematically shows a schedule for producing different grades of cement on four cement mills during one week, as determined according to the invention; and
Figure 2 shows a flow diagram for a computer program according to a preferred embodiment of the invention.

The reference symbols used in the drawings, and their meanings, are listed in summary form in the list of reference symbols. In principle, identical parts are provided with the same reference symbols in the figures.

### Detailed Description of Preferred Embodiments

The invention finds an optimal batch schedule or simply an optimal scheduling over a certain time horizon The invention is explained in terms of the scheduling of cement mills, while minimizing the costs of the purchase of electricity, minimizing the production of low grade cement and fulfilling a set of hard constraints. However, it is obvious for one versed in the art how to apply the inventive principles to other processes having similar classes of constraints and cost functions. In a preferred variant of the invention, the scheduling of the cement mills production is separated into a scheduling task over a first period of time that comprises a number of shorter second periods of time, and into several scheduling tasks over said second periods of time. Typically, the first period of time is one week, and the second periods of time are one day each. The corresponding scheduling tasks shall henceforth be called "weekly" and "daily" scheduling. However, it should be understood that the invention applies to arbitrary longer periods of time consisting of shorter ones. E.g. the first period of time may also be two weeks, one month etc, and the second period of time may lie in the range of hours or weeks, depending on the properties of the processes being scheduled.

The goal of the weekly scheduling is to determine the exact quantity of each cement grade that has to be produced, during every day of the week, on each cement mill. The daily scheduling, instead, has to decide how to commit the production hour by hour, in order to produce the exact amount of cement defined by the weekly scheduling.

The result of applying both algorithms in combination will be an optimal solution, according to predefined optimization criteria, and will fulfill constraints describing the physics of the problem.

### Weekly Scheduling

Consider having $n$ different cement grades that can be produced over $G$ production units or cement mills during one week. The output of the weekly scheduling, represented by values of manipulated variables $c_{w,i,j}$, defines a quantity in *tons* of cement of grade $i$ ($i = 1,..., n$) that is produced by mill $j$ ($j = 1,..., G$) on day $w$ ($w = 1,...,7$).

The notation:

$$\sum_{w=1}^{7}\sum_{j=1}^{G} c_{w,\bar{i},j}$$

represents the total amount of grade i produced during the week in the plant.

### Hard Constraints

In the statement of the optimization problem (system 22) the following constraints, representing the physics of the problem, are represented as equalities and inequalities included in the matrix $A_{eq}$ and $A$.

- **Fulfillment of daily sales**

  To run the optimization, the algorithm has to be provided with a forecast of the daily sales for every grade produced by the plant.

  All the sales (i.e. shipments of finished product) are considered to occur at the same moment, at end of the day. After the working in the mills, the cement of different grades is stored in corresponding storage units or silos having a limited storage capacity. The forecast of the sales determines a minimum amount of cement that has to be available, in the silos, at the end of the day.

  Let $s\_capacity(w, i)$ [ton] be the quantity of grade $i$ present in its silo at the beginning of day $w$, just after the sales of the previous day have taken place. The level of the silos at the beginning of the optimization, $s\_capacity$ $(1,i)$, is a given data, while the evolution of the level during the week is a function of the production and the sales:

$$s\_capacity(w+1, i) = s\_capacity(w, i) + \sum_{j=1}^{G} c_{w,i,j} - sales(w, i) \quad (1)$$

The fulfilment of the daily sales is then guaranteed by the inequality:

$$s\_capacity\ (w,i) \geq 0 \qquad (2)$$

- **Silos capacity**

  In order to increase the flexibility of the plant management, a plant operator can put bounds on the level of the silos at the beginning of the day. It is possible, for example, to decide the exact amount of cement one wishes to have in the silos, on a given day, by setting for that day the lower bound equal to the upper one. Having bounds too tight, or equal to zero or to the maximum capacity of the silos, can be dangerous in case of any change in the production or in sales. In the case, for example, when one silo is empty, it will not be possible to fulfill any demand for the product that is higher than the initial forecast. For this reason, the inequality (2), assuring the fulfillment of the sales, is preferrably modified into:

$$s\_lower\_bound(w, i) \leq s\_capacity(w,i) \leq s\_upper\_bound(w, i) \qquad (3)$$

where $s\_lower\_bound$ and $s\_upper\_bound$ are given data representing a desired lower and upper bound of the silo fill level during the week.

- **Mills availability**

  For every mill the operator can set a daily maximum number of hours of operation, $hours\ (w, j)$ [$h$]. It is possible, for example, to forbid the production of mill $\overline{j}$ on a certain day $\overline{w}$ by setting hours$(\overline{w},\overline{j}) = 0$. The availability constraint is then described by:

$$\frac{\sum_{i=1}^{n} c_{w,i,j}}{\alpha_{i,j}} \leq hours(w, j) \qquad (4)$$

where $\alpha_{i,j}[\frac{ton}{h}]$ are given constants representing the production rate of grade $i$ on mill $j$.

It is possible to forbid, for example, the production of grade $\overline{i}$ on the mill $\overline{j}$, simply by setting $\alpha_{\overline{i,j}} = 0$

- **Minimum daily production**

  In cement mills operations it is not recommended to switch frequently between the working of two different grades, due to the production of undesired "low grade cement".

  The algorithm allows to define, for each grade, a minimum daily amount of cement $d_i$[ton], that has to be produced if the mill is committed to the production of such a grade.

  A first set of boolean variables, $\delta^1_{w,i,j}$, defined as:

$$[\delta^1_{w,i,j} = 1] \Leftrightarrow [c_{w,i,j} \leq 0]$$

is introduced to detect if mill $j$ is not producing grade $i$ on day $w$. A complementary set of boolean variables, $\delta^2_{w,i,j}$ is set to one when the daily production of grade $i$ is higher than $d(i)$:

$$[\delta^2_{w,i,j} = 1] \Leftrightarrow [c_{w,i,j} \geq d_i] \tag{5}$$

Finally, the condition:

$$\delta^1_{w,i,j} + \delta^2_{w,i,j} = 1 \tag{6}$$

forces the algorithm not to commit the production of any amount of cement lower then the minimum desired quantity.

In general any boolean variable defined as:

$$[f(x) \leq 0] \Leftrightarrow [\delta = 1] \tag{7}$$

is equivalent to:

$$\begin{aligned} M\delta &\leq -f(x) + M \\ (m - \epsilon)\delta &\leq f(x) - \epsilon, \end{aligned} \tag{8}$$

where $m, M$ are lower and upper bounds on $f(x)$. Therefore, in this particular case, the boolean variables $\delta^1$ and $\delta^2$, can be represented in the general expression (22) by including the inequalities (9) and (10):

$$\begin{aligned} -c_{w,i,j} - \varepsilon \cdot \delta^1_{w,i,j} &\leq \varepsilon \\ c_{w,i,j} + M_{i,j} \cdot \delta^1_{w,i,j} &\leq M_{i,j} \end{aligned} \tag{9}$$

$$\begin{aligned} c_{w,i,j} + (d_i - M_{i,j} - \varepsilon)\delta^2_{w,i,j} &\leq d_i - \varepsilon \\ -c_{w,i,j} + d_i \cdot \delta^2_{w,i,j} &\leq 0 \end{aligned} \tag{10}$$

**Soft Constraints**

The hard constraints represent physical limitations that may not be violated. Soft constraints are introduced in order to improve scheduling solutions without making the scheduling problem unsolvable due to too narrow constraints. Soft constraints are modelled by associating to the violation of each constraint a slack variable. The slack variable is continuous or boolean, according to the type of the constraint, and is minimised in the cost function.

- **Number of processes per day**
  As described in section on weekly hard constraints and minimum daily production, in order to reduce the amount of low grade cement it is recommended to have the smallest number of different processes a day on the same mill.
  Such a goal could be achieved by increasing the minimum daily production, $d(i)$ in expression (5). Nevertheless a high value of $d(i)$ considerably reduces the freedom of the solution and might generate an infeasibility. For this reason the issue is modelled as a soft constraint.
  The number of processes executed on mill $j$ the day $w$ is given by the variables $day\_processes(w, j)$, defined as:

$$day\_processes(w, j) = \sum_{i=1}^{n} \delta^2_{w,i,j} \tag{11}$$

Let *MPD* be the desired maximum number of processes per day (normally *MPD* = 2):

$$day\_processes(w,j) \leq MPD \tag{12}$$

One way to relax constraint (12) is to introduce a set of continuous slack variables $\varepsilon^{dp}$, obtaining the new constraint:

$$day\_processes(w,j) \leq MPD + \varepsilon^{dp}_{w,j} \tag{13}$$

and minimize their sum ($\sum_{w,j} C_2 \cdot \varepsilon^{dp}_{w,j}$) in the cost function.

- **Number of processes per week**

  Another issue in the cement mill scheduling is to specialize, as much as possible, the operation of the mills. This is equivalent to reduce the number of grades produced by each mill during one week.

  One possibility is to forbid the production of grade $\bar{i}$ on mill $\bar{j}$ by setting to zero the corresponding production rate $\alpha_{\bar{i},\bar{j}}$ but as described in the section on weekly soft constraints and the number of processes per day, the risk is to make the problem unsolvable.

  To translate the condition as a soft constraint, four new type of variables have to be introduced.

  The number of days a week that mill *j* is committed to the production of grade *i* is given by:

$$dw\_processes(i, j) = \sum_{w=1}^{7} \delta^2_{w,i,j} \tag{14}$$

The boolean variables $\delta^{pw}_{i,j}$ are set to one only if process *i* is executed during the entire week on mill *j*:

$$[\delta^{pw}_{i,j} = 0] \Leftrightarrow [dw\_processes(i, j) \leq 0] \tag{15}$$

Equivalence (15) is, as shown above in general terms, equivalent to inequalities (16):

$$-dw\_processes(i, j) + \varepsilon \cdot -\delta^{pw}_{i,j} \leq 0$$
$$dw\_processes(i, j) - 7 \cdot \delta^{pw}_{i,j} \leq 0 \tag{16}$$

The total number of process committed over the week to each mill is stored by the integer variables *week_processes(j)*:

$$week\_processes(j) = \sum_{i=1}^{n} \delta^{pw}_{i,j} \tag{17}$$

Let *MPW* be the desired maximum number of processes a week (by default $MPW = ceil(\frac{n}{G})$). The formulation as a soft constraint (inequalities 18) is obtained by introducing slack variables $\varepsilon^{wp}_{j}$ and minimizing them in the cost function.

$$week\_processes(j) < MPW + \varepsilon^{wp}_{j} \tag{18}$$

- **Electrical power installed**

  Often, in the contracts of the supplying of electricity, an expected maximum use of power *[MW]* by the overall plant is agreed on between the electricity supplier and the cement plant manager. This maximum amount is usually called "installed power", although the power that may actually be delivered and consumed is larger. If the consumption exceeds such a threshold the cement plant manager has to pay penalties.

The algorithm allows to take that into account in term of a soft constraints. The optimization, when possible, will schedule the production so that the limit will never be exceeded.

Such a possibility to manage the power consumed can lead to reconsider the contract and decrease the power installed with a gain with respect to the electricity fares.

The power installed is normally not constant, but changes during the day. Let $Eng\_MW(t)[MW]$ ($t$ = 1,..., $DS$) be the values of power installed during one day, divided into $DS$ intervals.

The issue to avoid the overcoming of the limit, on every interval, cannot be solved by the weekly algorithm since its sampling time is one day; that will be solved in the daily scheduling section, as shown below.

The energy [$MWh$] consumed daily by the mills is given by:

$$day\_cons(w) = \sum_{i,j} c_{w,i,j} \cdot E_{i,j} \cdot 10^{-3} \qquad (19)$$

where $E_{i,j}[\frac{kWh}{t}]$ is the energy consumed by mill $j$ when producing one *ton* of grade $i$.

The maximum energy that can be used in a day, without paying any penalty is given by the integral, in time, of the power installed during the day.

$$Eng\_MWh(w) = \int_{t=0}^{t=24} Eng\_MW(t)dt$$

The task of the weekly algorithm is then to schedule the production so that, when possible, the consumption of the mills will be less than the daily maximum energy installed:

$$day\_\ cons(w) \leq Eng\_MWh(w)$$

The translation in terms of soft constraints (20) requires the introduction of slack variables $\varepsilon^{MWh}$ that will be minimized in the cost function.

$$day\_cons(w) \leq Eng\_MWh(w) + \varepsilon_w^{MWh} \qquad (20)$$

**Cost function**

The cost function can be divided into four different parts:

$$f(x) = f_{energycost}(x) + f_{day}(x) + f_{week}(x) + f_{MWh}(x) \qquad (21)$$

• Energy cost: The optimization will try to commit the production at the days when the mean of the electricity price, $p_w[\frac{\$}{kWh}]$ is lower.
That term is the only one whose dimension is a cost, as it is the product between $\frac{kWh}{t} \cdot t \cdot \frac{\$}{kWh}$.

$$f(x)_{energycost} = C_1 \cdot \sum_{w,i,j} E_{i,j} \cdot c_{w,i,j} \cdot p_w$$

• Processes per day:

$$f(x)_{day} = C_2 \cdot \sum_{w,j} \varepsilon_{w,j}^{dp}$$

• Processes per week:

$$f(x)_{week} = C_3 \cdot \sum_{j} \varepsilon_{j}^{wp}$$

• Power installed:

$$f(x)_{MWh} = C_4 \cdot \sum_{w} \varepsilon_{w}^{MWh}$$

The value of the coefficients $C_i$ ($i$ = 1,.., 4) reflects the importance associated to each issue. Any change of the coefficients, dramatically influences the output of the algorithm.

Since, besides $f(x)_{energycost}$, the other components of the cost function have no dimension, it is difficult to correctly weight the coefficients. Such operation, in most of the cases, has to be done with the end user.

**Optimization**

The result of the *Mill scheduling* is a constrained optimization problem, formulated as a mixed integer linear program:

$$\begin{aligned} \min_{x} \quad & f(x) \\ subject \quad to: \quad A_{eq}x \; &= \; b_{eq} \\ Ax \; &\leq \; b \end{aligned} \qquad (22)$$

The vector of the optimization variables $x$ is given by:

$$x = \begin{pmatrix} c \\ s\_capacity, \\ day\_processes, \\ dw\_processes, \\ week\_processes, \\ day\_cons, \\ \varepsilon^{dp}, \\ \varepsilon^{wp}, \\ \varepsilon^{MWh}, \\ \delta^1, \\ \delta^2 \end{pmatrix}$$

The total number of variables is $23nG + 16G + 8n + 14$. In the example described section on weekly output, the optimization variables are 524, out of which 254 continuous and 270 boolean.

The matrix $A$ includes all the inequalities (3, 4, 9, 10, 13, 16, 18, 20) representing the constraints, as well as $A_{eq}$ includes the set of equations (1, 6, 11, 14, 17, 19).

The weekly scheduling of five grades on three mills, using the commercially available mixed integer linear and quadratic optimisation program Cplex7.1, has last 25" on a Pentium 3 933*MHz*. In other preferred embodiments of the invention, optimisation techniques such as simulated annealing or genetic algorithms are applied. The term "optimal solution" as used throughout this application denotes not necessarily a theroetical global optimum, but rather a solution better than all other solutions found after a given time or computational effort or after a termination criterion of the respective optimisation algorithm is satisfied.

**Output**

The table 1 summarizes data needed to run the algorithm.

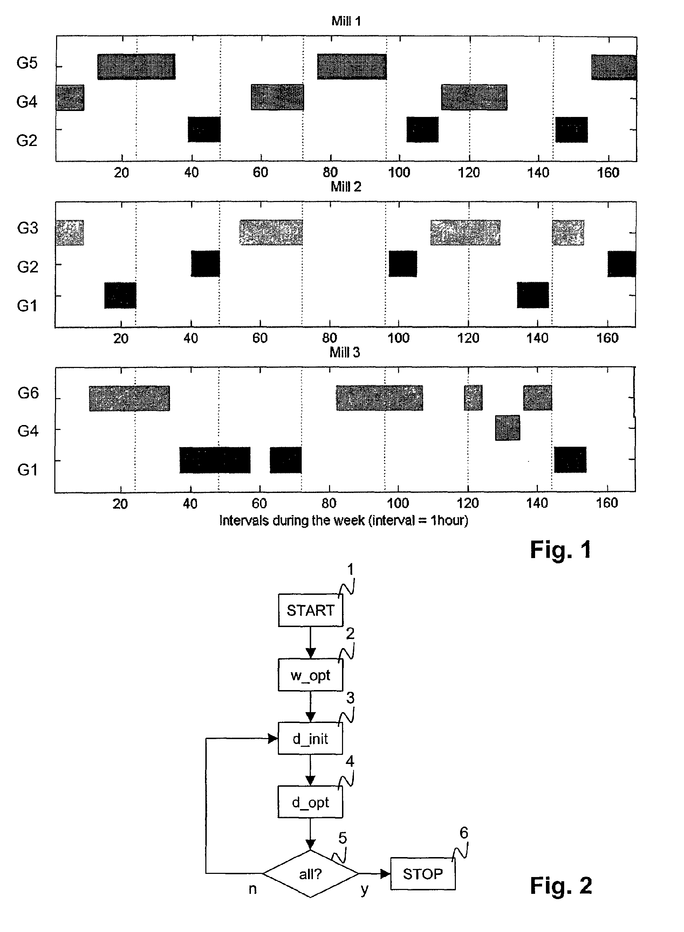

The third column contains the values used for an example, with schedule results shown in Figure 1.

**Daily scheduling**

Once the solution of the weekly scheduling has been achieved, the daily scheduling is then run, for each day, $G$ times iteratively. At every iteration, the scheduling of one mill only is determined, largely independent from the other mills. For this reason, the index $j$, defining the mills, will be neglected in the following description of the daily scheduling algorithm. Splitting the problem advantageously reduces the computational complexity of the optimization problem and therefore the time to get a useful solution.

Table 1:

| Parameters for Cement Mill scheduling optimization algorithm | | |
|---|---|---|
| Magnitude | Notation and dimension | Values for the example |
| Number of mills | G | 4 |
| Number of processes | $n$ | 6 |
| Production rate | $\alpha_{i,j}[\frac{ton}{h}]$ | $\in[40; 50]$ |
| Minimum daily production | $d_i[ton]$ | 400 |
| Availability | $hours_{w,j}$, $[h]$ | $\in [20; 24]$ |
| Daily sales | $sales_{w,i}[ton]$ | $\in [350; 400]$ |
| Silos starting capacities | $s\_capacity\,(w,i)[ton]$ | 400 |
| Silos lower bound | $s\_lower\_bound(w, i)\,[ton]$ | $\in [200; 800]$ |
| Silos upper bound | $s\_lower\_bound(w, i)\,[ton]$ | $\in [2500; 3000]$ |
| Max processes per day | $M\,PD$ | 2 |
| Max processes per week | $M\,PW$ | 3 |
| Electricity price | $p_w[\frac{\$}{kWh}]$ | $\in [0.5;1]$ |
| Power installed | $Eng\_MW(t)[MW]$ | $\in [2.6; 2.7]$ |

**Hard constraints**

- **Set points fulfillment**
  The quantity of cement to be produced every day by the current mill is stored in the variables $c_{w,i}$, computed in the weekly scheduling. The task of the daily scheduling is to decide how to commit the production on the $DS$ intervals in which the day is divided. In order to obtain a better optimum with respect to the number of switches between grades , the optimization horizon of the daily scheduling is preferrably set to one week, but any shorter period, up to one single day, is allowed.
  The number of variables of the algorithm is proportional to $DS$, for that reason, it is not recommended to use higher values than the default one $(DS = 24)$, corresponding to a sampling time of 1 hour.
  The number of intervals that grade $i$ has to be produced on day $w$ is given by:

$$Q_{w,i} = round\left(\frac{c_{w,i}[t]}{\alpha_i[\frac{t}{h}] \cdot dt[h]}\right) \qquad (23)$$

where $dt = 24/DS$ is the length of an interval in hours. Since $Q_{w,i}$ has to be rounded to an integer, the production scheduled by the daily scheduling will not be exactly equal to the one computed by the weekly scheduling However, the average error is zero.

The total number of intervals a day a mill has to be working, is given by:

$$Qtot_w = \sum_{i=1}^{mill\_n} Q_{w,i}$$

where $mill\_n$ is the number of grades actually produced by the current mill, normally less than $n$.

There shall be associated with any interval of the week ($int$ = 1,..., $DS \cdot 7$) a set of $mill\_n$ boolean variables $\delta_{int,i}$, that are set to one if and only if grade $i$ is produced at time $int$.

Finally, forcing for every day of the week, the sum of the corresponding $\delta_{int,i}$ to be equal to the pre-computed number of intervals $Q_{w,i}$ (equation 23), assures the fulfillment of the set point constraint:

$$\sum_{int=1+DS\cdot(w-1)}^{DS\cdot w} \delta_{i,int} = Q_{w,i} \qquad (24)$$

$w$ = 1,...,7; $i$ = 1, ...,$mill\_n$

- **Physical**

On any mill only one grade can be produced at a time.

Such a physical constraint is modelled by forcing, for every interval $\overline{int}$, the sum of the $\delta_{i,\overline{int}}$ to be lower than or equal than one.

$$\sum_{i=1}^{n} \delta_{i,int} \leq 1 \qquad (25)$$

$int$ = 1, ..., $DS \cdot 7$

**Soft Constraints**

- **Switching**

Due to the production of undesired low grade cement and to the high time constants of the process, one of the main issues of the cement mill scheduling is to reduce as much as possible any change in the operations.

The logical variables $\delta^s_{i,int}$, defined as follow:

$$[\delta_{i,int} - \delta_{i,int+1} = 1] \Leftrightarrow [\delta^s_{i,int} = 1] \qquad (26)$$

$int$ = 1,..,$DS \cdot 7$ - 1

detects any change in the production.

Expression (26), whose truth table is equivalent to $(\delta_{i,int} \oplus \delta_{i,int+1}) \Leftrightarrow \delta^s_{i,int}$, is modelled as a constraint by the inequalities:

$$\begin{aligned}
-\delta_{i,int} - \delta_{i,int+1} + \delta_{i,int}^s &\leq 0 \\
-\delta_{i,int} + \delta_{i,int+1} - \delta_{i,int}^s &\leq 0 \\
\delta_{i,int} - \delta_{i,int+1} - \delta_{i,int}^s &\leq 0 \\
\delta_{i,int} + \delta_{i,int+1} + \delta_{i,int}^s &\leq 2
\end{aligned} \tag{27}$$

- **Electrical power installed**

As described in the section on daily scheduling, due to the independency of the mills operations, the daily scheduling can be split and solved iteratively mill, by mill. The only case where that assumption is not fulfilled is for the Power installed issue, where the sum of the consumptions of <u>all</u> the mills has to be considered.

In order not to lose the computational advantages gained by fragmenting the problem, the following solution is used:

Let the variable $int\_cons^j$ ($int$) [$MW$] represent the trend of the consumption of the current mill at every interval of the week:

$$int\_cons^j(int) = \sum_{i=1}^{mill\_n} \delta_{i,int} \cdot E_i \cdot \alpha_i \cdot 10^{-3} \tag{28}$$

The power available for the first mill under consideration ($j = 1$) is equal to the total power installed, $eng\_MW$ ($int$) (see section on Weekly soft constraints and electrical power installed!), while the power available for the following mills ($mill\_MW^j$) will be the difference between the installed one and the sum of the consumptions of the previous mills:

$$mill\_MW^j(int) = eng\_MW(int) - \sum_{\xi=1}^{j-1} int\_cons^\xi(int)$$

$j = 2, .., G$

Of course the most critical scenario will always be for the last mill, whose amount of power available is the the lowest.

Again, a "watch dog" boolean variable (expression 29, inequalities 30) is defined, which is responsible to detect the fulfillment of the soft constraint, and that will be minimized in the optimization.

$$[\delta_{int}^{MW} = O] \Leftrightarrow [int\_cons^j(int) \leq mill\_MW^j(int)] \tag{29}$$

$$\begin{aligned}
-int\_cons^j(int) - min \cdot \delta_{int}^{MW} &\leq -mill\_MW^j(int) - min \\
int\_cons^j(int) - (Max + \varepsilon) \cdot \delta_{int}^{MW} &\leq mill\_MW^j(int) - \varepsilon
\end{aligned} \tag{30}$$

$$Max = max(E_i \cdot \alpha_i) * 10^{-3} - mill\_MW^j; \; min = -mill\_MW^j$$

**Cost function**

The cost function can be divided into three different parts:

$$f(x) = f_{energycost}(x) + f_{switch}(x) + f_{MW}(x) \tag{31}$$

- Energy cost: The optimization will try to commit the production at those intervals when the electricity price, $p_{int}$ $[\frac{\$}{kWh}]$ is lower.
  That term is the only one whose dimension is a cost, as it is the product between $\frac{\$}{kWh} \cdot \frac{t}{h} \cdot \frac{kWh}{t} \cdot h$.

$$f(x)_{energycost} = C_1 \cdot \sum_{i,int} p_{int} \cdot \alpha_i \cdot E_i \cdot dt$$

- Switching:

$$f(x)_{switch} = C_2 \cdot \sum_{i,int} \delta_{i,int}^s$$

- Power installed:

$$f(x)_{MW} = C_3 \cdot \sum_{int} \delta_{int}^{MW}$$

**Optimization**

The constraints of the daily scheduling are represented by the inequalities (25, 27, 30) and the equations (24, 28).

The daily scheduling of six cement grades on three mills, using Cplex7.1, has last 45" on a Pentium 3 933$MHz$.

A flow diagram of a computer program implementing the inventive method is given in Figure 2. In step 1, program execution is started and a description of the scheduling problem is read from a computer storage device and/ or acquired from user input. In step 2, the weekly scheduling over the first period of time is performed. In step 3, the "daily" scheduling problem (i.e. over the second period of time) is initialised for the first "day" and the first production unit or cement mill. In step 4, the daily scheduling problem is solved and the total amount of power consumption committed so far for that day is computed. In step 5, it is checked whether the "daily" scheduling has been performed for all days and all mills. If yes, then execution stops and the schedule is output to an operator at step 6, otherwise, execution continues with step 3 for the next day and/or mill not considered so far. In another preferred embodiment of the invention, the optimal schedule is transferred to a plant control system and used to automatically control the production units or cement mills. Preferably, the inventive method is executed repeatedly each "day", using updated information on orders and sales, energy prices, etc, and operation of the plant is performed according to a correspondingly updated optimal schedule.

Instead of splitting the optimisation task into the two distinct steps of "weekly" and "daily" optimisation, it is in principle possible to combine the objective functions and constraints and find an overall optimal solution. However, the computational complexity and cost are much higher for such a procedure.

**Model Predictive Control for reference tracking**

In the previous sections on weekly and daily scheduling, techniques to derive the schedule of cement mills operations have been described. The main output for the operator responsible to run the mills is the sequence of switches of the mills, for instance in the form of Gantt charts.

The above methodology produces an open loop type of optimal schedule, which relies on prediction of mills and silos technical characteristics, their state at the time of use (silos content level, mills current availability, etc.), and on forecasts of product prices and orders to be satisfied in the next future. However, in practice, these conditions and forecasts are not exact: unplanned events like failures of some components, or simply a change in the product shipping are very frequent, so that in a real application the schedule computed could become not optimal after a certain time. In order to cope with that situation there are two main possibilities:

Either recompute the schedule very often, repeating all the steps as above, which can be costly and cumbersome, or apply advanced control techniques to compensate for these errors and return the system to a state according to the optimal reference schedule. In other words, use model based optimal control to reject process disturbances, in our case, to reject deviations from the optimal silos levels introduced, for instance, by the shipping activities (i.e. difference between real deliveries and forecasted ones) or by mismatches between the mill productivity rates assumed during scheduling and the real ones. In order to respond optimally way to these disturbances, a closed loop controller is applied, based on Model Predictive Control techniques, which tracks the reference schedule computed previously.

The observed variables are the levels in the silos, while the control variables are the switching commands to the mills. In the cost functional of the controller appear, with different weighting factors, deviations from the reference trajectories for the silo levels and the mills status (on/off on which product), respectively.

$$J := C_{silos}\|y(t) - y_{ref}(t)\| + C_{mills}\|u(t) - u_{ref}(t)\|$$

At every time sample (normally every hour), the controller compares the current values with the reference. If differences are detected, it minimizes such deviations according to the weights chosen over certain time horizon. Furthermore, to better represent the physics of the system, the following constraints to be fulfilled by the solution of the MPC are preferrably considered:

- **Silo lower and upper bounds.**

- **Banned product.** It is possible to forbid the operation of some cement grades on some mills.

- **Conveyor belts.** In plants with many mills, there are usually constraints in the conveyor belt system for transporting the cement from the mills to the silos. For example, there might be 3 mills but just 2 independent conveyor belts. This means that just two grades of cement can be produced at the same time. Usually, multiple mills can discharge the same grade to the same conveyor belt at the same time.

- **Consecutive production.** It is possible to constrain the system to maintain the operation on one mill unchanged for a minimum interval of time. This constraint avoids an excessive switching of the mills.

- **Planned shutdowns.** Prohibits the operations of certain mills over defined intervals.

- **Startup times.**

In a preferred embodiment of the invention, this predictive control algorithm works online, passing its decisions directly to the plant and mill control system, without operator intervention.

The Model Predictive Control requires a model of the system in order to make a prediction of the system behavior in the steps following the current time. Due to the hybrid features of the plant, such a model has been derived in the Mixed Logic Dynamic (MLD) framework, described in *Control of systems integrating logic, dynamics, and constraints-Bemporad A. and M. Morari- Automatica, Special issue on hybrid systems, Vol. 35, n.3, p.407-427)*. A detailed description of the steps needed to combine MPC and MLD can be found in *Controllo di impianti cogenerativi mediante sistemi ibridi - Letizia, University of Pavia, Master Thesis, March 2001.*

**List of designations**

G1...G6    Grades one ... six of cement produced
1              START, begin program execution
2              w_opt, weekly scheduling
3              d_init, initialise daily scheduling
4              d_opt, daily scheduling
5              all?, check if all daily schedules are generated
6              STOP, generate output and stop program execution

## Claims

1. A method for batch scheduling for a plurality of production units, **characterised in that** each production unit is capable of producing a predetermined quantity of a product having at least one characteristic grade that is controllable by a manner of operating the production unit, and that a batch schedule to be determined comprises a specification of what grade product is to be produced on which production unit at which time of a predetermined first period of time, and that the method comprises a scheduling step of
minimising an objective function subject to hard constraints, where said objective function is computed as a function of the batch schedule and comprises a cost of energy used by the production units during the first period of time, and where said hard constraints are expressed as equalities and inequalities in terms of the batch schedule and comprise

   • a specification of quantities of the product of a given grade to be produced,
   • a set of maximum and minimum storage capacities for each product grade, and where minimising the objective function is achieved by repeatedly varying the batch schedule subject to the hard constraints and computing the value of the objective function until an optimised value of the objective function is obtained,
   and returning, as result of the minimisation, an optimal batch schedule corresponding to the optimised value of the objective function.

2. Method according to claim 1, where the hard constraints comprise an expression stating that a production unit can be used for only one product grade at a time, or that a production unit cannot be used at all.

3. Method according to claim 1 or 2, where the hard constraints comprise an expression stating that, if a production unit is committed to produce the product of a given grade, then a minimal quantity of said grade must be produced by said production unit.

4. Method according to one of the preceding claims, where the objective function comprises a term that penalises changes in product grade produced in the same production unit.

5. Method according to one of the preceding claims, where the objective function comprises a term that penalises a use of energy per time unit that exceeds a given limit.

6. Method according to claim 1, where the first period of time is split into a sequence of second periods of time, and the method comprises
a first scheduling step that schedules production over the first period of time and determines, for each of the second periods of time and for each production unit, a set of quantities of product of a given grade that is to be produced, and
a second scheduling step that schedules production by one production unit for one of the second periods of time, where the second scheduling step is executed repeatedly for each of the second periods of time and for each of the production units.

7. Method according to claim 6, where the first scheduling step comprises
minimising an objective function subject to hard constraints, where said objective function comprises

   • a cost of energy used by the production units, a term that penalises changes in product grade produced in the same production unit, and
   • a term that penalises a use of energy per time unit that exceeds a given limit, and where said hard constraints comprise,
   • for each of the second periods of time, a set of quantities of the product to be produced having a given grade,
   • a set of maximum and minimum storage capacities for each product grade,
   • an expression limiting, for each production unit and for each of the second periods of time, the time that the production unit may be in operation, and
   • an expression stating that, for each of the second periods of time, when a production unit is committed to produce the product of a given grade, then a minimal quantity of said grade must be produced by said production unit.

8. Method according to claim 6, where the second scheduling step that schedules production by one production unit for one of the second periods of time comprises the step of

- minimising an objective function subject to hard constraints, where said objective function comprises a cost of energy used by the production unit, a term that penalises changes in product grade produced in the production unit, and a term that penalises a use of energy per time unit that exceeds a given limit,

and where said hard constraints comprise,

- for the production unit, a set of quantities of the product having a given grade, to be produced, and
- an expression stating that only one grade can be produced at the same time.

9. Method according to claim 7, where the term that penalises changes in product grade produced in the same production unit comprises, for each production unit, the number of different product grades produced by said production unit over the first period of time and, for each production unit and each of the second periods of time, the number of different product grades produced by said production unit.

10. Method according to one of the preceding claims, where the production units are cement mills or mills for producing raw meal, and the controllable characteristic grade is one of grade of cement or grade of raw meal.

11. Method according to claim 10, comprising the step of generating a human-readable description of the optimal batch schedule.

12. Method according to claim 10, comprising the step of controlling the cement mill operation according to the optimal batch schedule.

13. Method according to claim 12, where model predictive control techniques are applied for ensuring that actual operation of the cement mills corresponds to the scheduled operation.

14. Computer program for batch scheduling for a plurality of production units which is loadable and executable on a data processing unit and which computer program, when being executed, performs the steps according to one of claims 1 to 13.

15. Apparatus for batch scheduling for a plurality of production units, comprising a data processor, a memory coupled to the processor and computer program code means stored in said memory, where said computer program code means, when executed by the processor, performs the steps according to one of claims 1 to 13.

Fig. 1

Fig. 2

**European Patent Office**

**DECLARATION**

which under Rule 45 of the European Patent Convention EP 02 40 5629 shall be considered, for the purposes of subsequent proceedings, as the European search report

**Application Number**

| | |
|---|---|
| The Search Division considers that the present application, does not comply with the provisions of the EPC to such an extent that it is not possible to carry out a meaningful search into the state of the art on the basis of all claims<br><br>Reason: | **CLASSIFICATION OF THE APPLICATION (Int.Cl.7)**<br><br>G06F17/60 |

The claims relate to subject-matter excluded from patentability under Article 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC; see also Guidelines for Examination in the EPO, Part B, Chapter VIII, 1-6).

The applicant's attention is drawn to the fact that a search may be carried out during examination following a declaration of no search under Rule 45 EPC, should the problems which led to the declaration being issued be overcome (see EPC Guideline C-VI, 8.5).

---

| Place of search | Date | Examiner |
|---|---|---|
| MUNICH | 1 October 2002 | Kemény, M |